# EUROPÄISCHE PATENTSCHRIFT

(11) **EP 0 355 003 B1**
(45) Veröffentlichungstag und Bekanntmachung des Hinweises auf die Patenterteilung: **21.04.1993**
(21) Anmeldenummer: 89114323.2
(22) Anmeldetag: 03.08.1989
(51) Int. Cl.: B29C 45/40

(54) **Fördervorrichtung an einer Kunststoff-Spritzgiessmaschine zum Austragen der Spritzteile**
Conveying device at a plastic injection-moulding machine for transferring the mouldings
Dispositif de transport sur une machine à mouler par injection des matières plastiques pour décharger des pièces moulées

(30) Priorität: 18.08.1988 DE 3827987
(43) Veröffentlichungstag der Anmeldung: 21.02.1990
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- DE-A- 2 300 202
- DE-A- 3 430 032

## Beschreibung

Die Erfindung betrifft eine Fördervorrichtung entsprechend den Merkmalen des Oberbegriffes des Patentanspruches 1.

Bei den üblichen Fördervorrichtungen (z.B. DE 32 38 185 C3; DE 34 08 459 C2) sind die Förderbänder aus flexiblen, gewebeverstärkten Bahnen aus Latex oder aus einem synthetischen Gummi gefertigt und laufen auf Umlenktrommeln der Fördervorrichtung. Demzufolge ist die Förderfläche in der Regel aus einem relativ wenig wärmeresistenten hochpolymerem Werkstoff gebildet, welche beim Spritzbetrieb oftmals sowohl mechanisch als auch thermisch beansprucht ist. Letzteres gilt vor allem dann, wenn Spritzteile auszutragen sind, die bei relativ hoher Temperatur aus dem Spritzgießwerkzeug fallen. Starke Belastungen des Förderbandes ergeben sich beispielsweise auch, wenn heißer Kunststoff mit abrassiven und/oder korrosiven Eigenschaften aus dem Bereich des Spritzgießwerkzeuges auf die Förderfläche abtropft.

Aus der DE 23 00 202 C2 ist es auch bekannt, die Förderfläche eines Transportbandes aus Fördergliedern aus Metall oder Kunststoff zu bilden. Dabei sind die Förderglieder jedoch wie die Glieder einer Kette aneinandergehängt, so daß die Auswechslung eines Fördergliedes, ohne 'Zerfall' des Transportbandes nicht möglich ist,
Der Oberbegriff des Anspruches 1 orientiert sich an diesem bekannten Förderband.

Der Erfindung liegt die Aufgabe zugrunde, eine Fördervorrichtung der eingangs genannten Gattung derart auszubilden, daß sie einerseits sehr gute Voraussetzungen für eine rationelle Serienfertigung aufweist und andererseits auch das Austragen relativ heißer Spritzteile aus Kunststoffen mit agressiven und/oder abras iven Eigenschaften auf die Dauer aushält. Zudem soll die Möglichkeit bestehen, im Falle einer störenden bzw. die Funktion beeinträchtigenden Verschmutzung oder im Falle eines Defektes einzelne Bauteile bei geringem Arbeitsaufwand und einfacher Handhabung auszuwechseln.

Diese Aufgabe wird erfindungsgemäß durch die im Patentanspruch 1 genannten Merkmale gelöst.

Bei einer solchen Ausbildung liegen besonders günstige Voraussetzungen für eine rationelle Serienfertigung vor, weil die Vorrichtung aus standardisierten Bauelementen zusamm enfügbar ist, wobei die Bandlamellen mittels identischer Kunststoff-Formstücke manuell in das Förderband einfügbar bzw. aus diesem herausnehmbar sind. Die hohe Wärmeleitfähigkeit der metallenen Förderfläche stellt einen extrem raschen Wärmeaustausch zwischen den Spritzteilen und der Atmosphäre über die Förderfläche sicher. Im Falle der Weiterbildungen gemäß Ansprüch 2 sind sowohl die Bandlamellen als solche, als auch die miteinander verbundenen Kettenglieder einzeln manuell auswechselbar.

Nachstehend wird die Erfindung anhand der Zeichnung an einem Ausführungsbeispiel erläutert.

Es zeigen:
- Fig. 1: Die in den Transportraum des Maschinengestells einer Kunststoff-Spritzgießmaschine eingelegte Fördervorrichtung in Seitenansicht,
- Figs. 2,3: die teilweise aufgeschnittene Fördervorrichtung in Draufsicht sowie in Stirnansicht in vergrößerter Darstellung,
- Fig. 4: Ausschnitte aus der teilweise seitlich aufgeschnittenen Fördervorrichtung gemäß Fig. 1,
- Fig. 5: einen Ausschnitt aus Fig. 2 in vergrößerter Darstellung,
- Fig. 6-9: ein kettenglied der Gelenkkette der Fordervorrichtung mit angeclipster Bandlamelle in Stirnansicht, Seitenansicht und Draufsicht (Fig. 8 zeigt die Bandlamelle gemäß Fig. 9 als solche ),
- Fig. 10-12: das Kettenglied in einer Darstellung gemäß den Fign. 6,7 und 9 ohne die zugehörige Bandlamelle,
- Fig. 13: einen Schnitt nach Linie XIII-XIII von Fig. 14 und
- Fig. 14: einen Ausschnitt aus dem vergrößert dargestellten Transportband der Fördervorrichtung in Draufsicht.

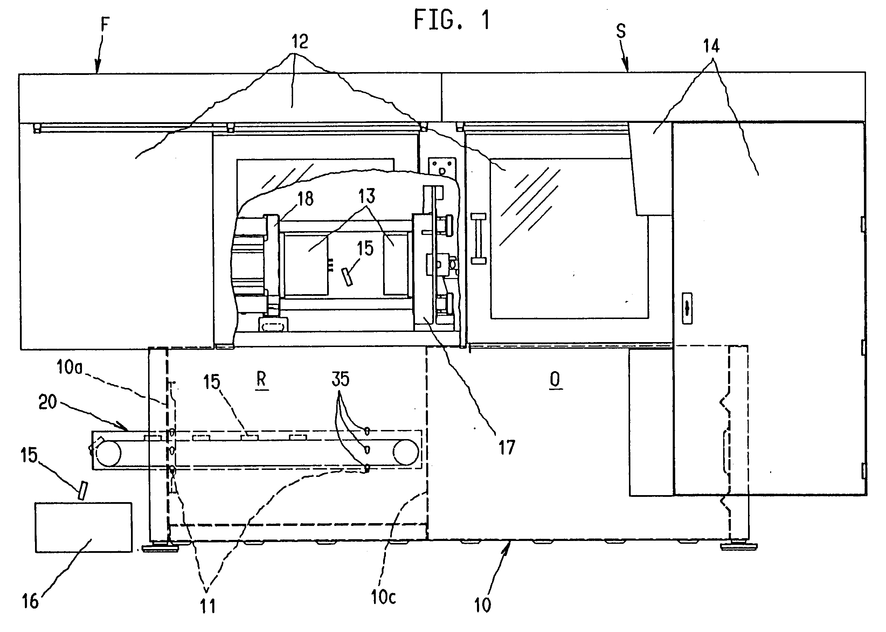

Wie aus Fig. 1 ersichtlich, sind auf einem quaderförmigen Maschinenfuß 10 einer üblichen Kunststoff-Spritzgießmaschine eine horizontal schließende Formschließeinheit F und eine Spritzgießeinheit S angeordnet, die mit Schutzabdeckungen 12 abschirmbar sind. Eine Schaltschrank 14 für die elektronischen Steuerungen ist spritzgießseitig an die Spritzgießmaschine angebaut. Die Formhälften des Spritzgießwerkzeuges 13 sind von den Formträgern 17,18 der Formschließeinheit aufgenommen. Der Maschinenfuß ist durch eine Querwand 10c in einen schließseitigen Transportraum R und einen spritzgießseitigen Ölraum 0 getrennt. Im Transportraum ist die als Fördereinheit 20 ausgebildete Fördervorrichtung auf Aufnahmeleisten 11 abgestellt. Diese sind wahlweise in unterschiedlicher Höhe in den Längswänden des Maschinenfußes abstützbar. Dabei liegen sie auf den unteren Stanzkanten von Ausnehmungen 35 in den genannten Längswänden auf. Die Förderfläche der Fördereinheit 20 deckt sich wenigstens teilweise mit der vertikalen Projecktion des Spritzgießwerkzeuges 13. Die am Takt der Arbeitszyklen aus dem geöffneten Spritzgießwerkzeug 13 fallenden Spritzteile 15 werden auf der Förderfläche der Fördereinheit 20 über eine stirnseitige Austragöffnung 10a aus dem Maschinengestell 10 ausgetragen und in einen Teilebehälter 16 abgeworfen.

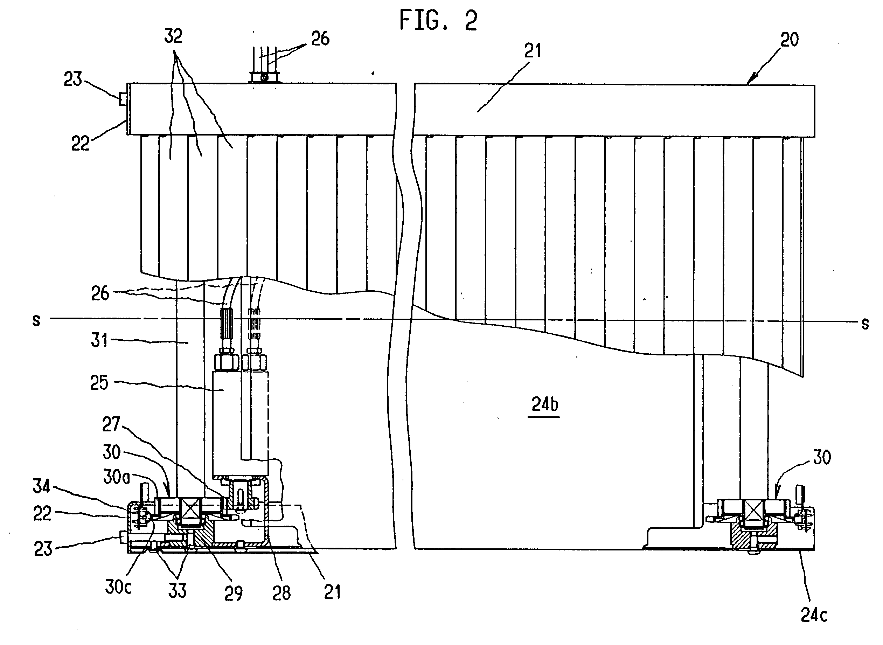

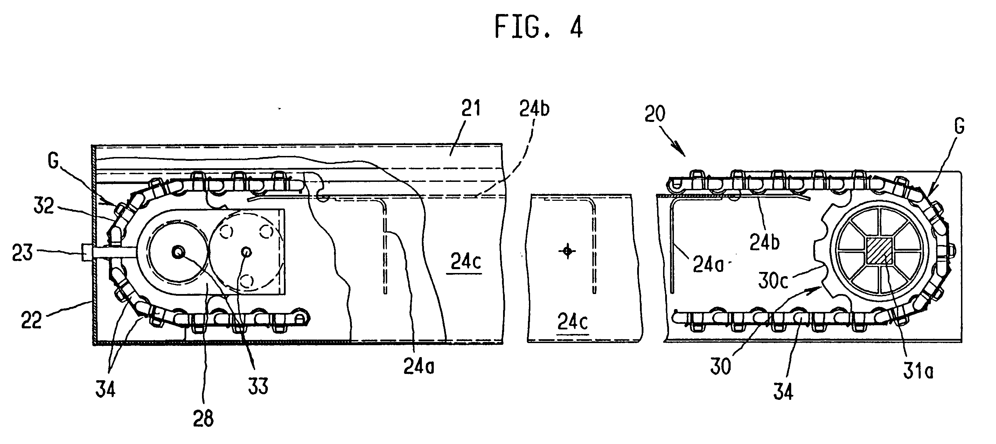

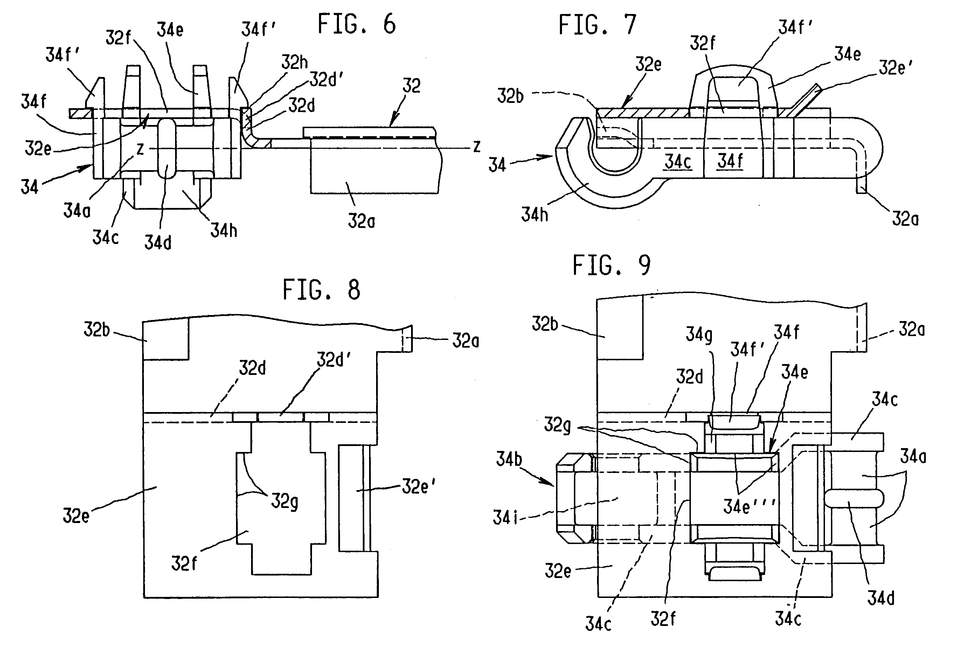

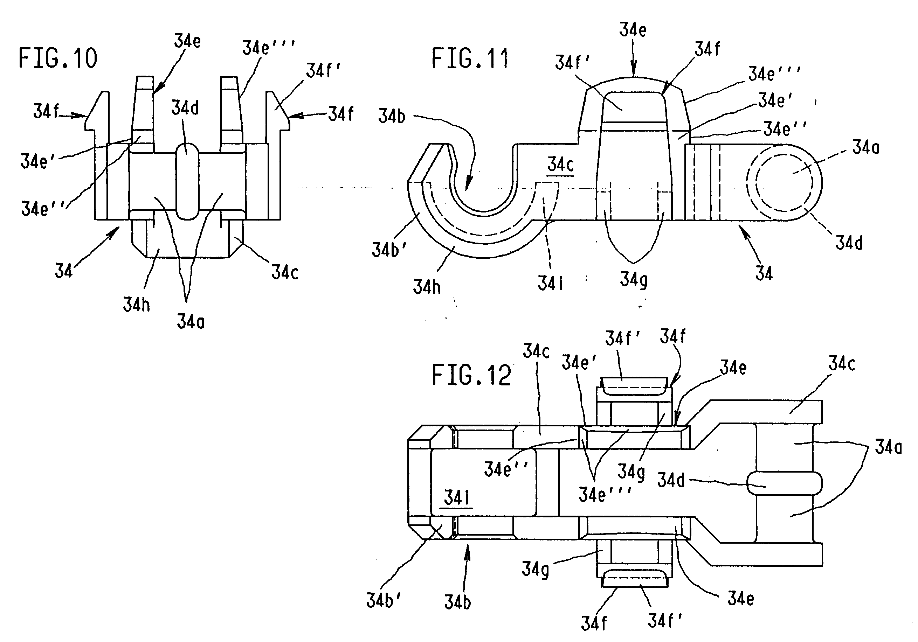

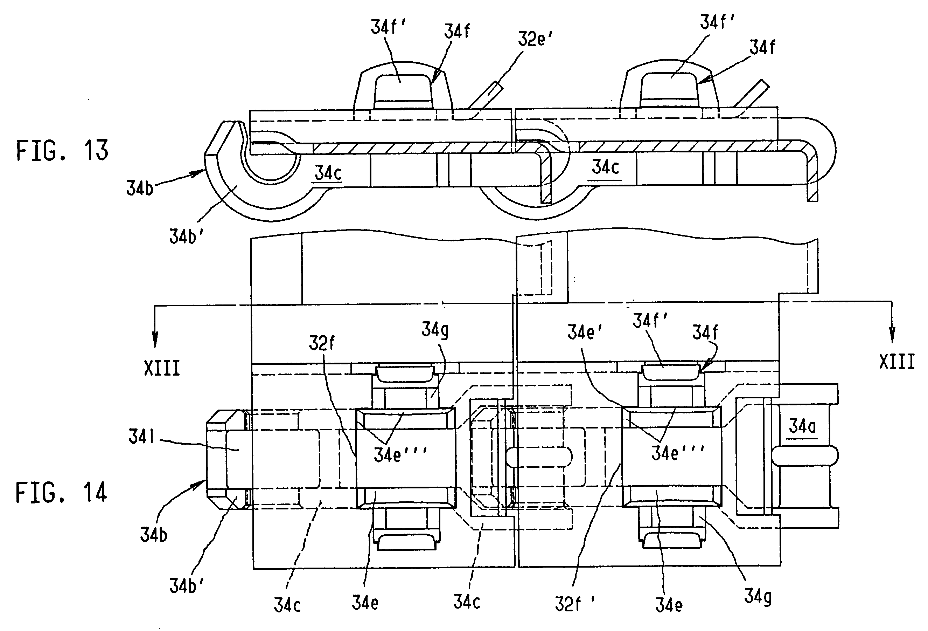

Im zeichnerisch dargestellten Ausführungsbeispiel umfaßt die Fördereinheit 20 ein endloses, auf Kettenrädern 30 geführtes, motorisch antreibbares Transportband, das als Gliederband ausgebildet ist. Die Förderfläche ist aus aneinandergereihten Bandlamellen 32 aufgebaut. Diese Bandlamellen 32 sind aus Blechzuschnitten gebildet. Diese sind annäherungsweise symmetrisch zur Symmetrieebene s-s (Fig. 2) des Transportbandes auf Gelenkketten G abgestützt, die mit den Kettenrädern 30 kämmen. Wie insbesondere aus den Fign. 6 bis 9 und 13 bis 14 ersichtlich, ist an die Bandlamellen an jeder Stirnseite ein im Spritzgießverfahren aus Kunststoff erzeugtes Kettenglied 34 formschlüssig und lösbar angefügt. Wie bei einer metallenen Gelenkkette, z.B. einer Gall'schen Kette, sind die identischen Kettenglieder 34 je aus zwei parallelen Laschen 34c gebildet und weisen einen Gelenkbolzen 34a auf. Der einenends am Kettenglied 34 angeordnete Gelenkbolzen 34a ist beidseits von den Endabschnitten der Laschen 34c begrenzt, die im Bereich des Gelenkbolzens Flansche bilden. Anderenends läuft das Kettenglied 34 in ein Gelenkbolzen-Lagerteil 34b aus, in welches der Gelenkbolzen 34a des benachbarten Kettengliedes 34 radial unter Herstellung eines Hintergriffs einfügbar ist. Das Gelenkbolzen-Lagerteil 34b ist durch halbringförmige Laschenabschnitte 34b′ mit halbkreisförmigen Schwenklagern gebildet. Die Laschenabschnitte 34b′ sind über einen halbkreisförmigen Steg 34i miteinander verbunden. Dieser Steg 34i bildet mit den Laschenabschnitten 34b′ den Eingriffsbereich 34hfür den Kettenrad-Eingriff. Der Durchmesser des Gelenkbolzens 34a ist derart auf den Radius der halbkreisförmigen Schwenklager der Laschenabschnitte 34b′ abgestimmt, daß der Gelenkbolzen 34a des einen Kettengliedes unter Überwindung eines gerinfügigen Reibwiderstandes in die Schwenklager des benachbarten Kettengliedes 34 eindrückbar ist. Auf diese Weise sind die Kettenglieder 34 zur Bildung der Gelenkkette gewissermaßen miteinander verclipsbar und in gleicher Weise voneinander trennbar, wobei eine quer zur Förderrichtung gerichtete Relativbewegung der benachbarten Gelenkglieder erforderlich ist. Zur Verclipsung der Kettenglieder 34 mit den zugehörigen Bandlamellen 32 sind an jedem Kettenglied 34 zwei Zentrieranformungen 34e angeordnet und in einen Ausschnitt 32f der zugehörigen Bandlamelle 32 unter Führung an Gleitflächen 34e‴ einfügbar. Nach Einfügung liegt jede Zentrieranformung 34e mit senkrecht zueinander stehenden Zentrierflächen 34e′,34e˝ (Fig. 10-13) an Anlagekanten 32g (Fig. 8,9,14) der zugehörigen Bandlamelle 32 an. Gestaltung und Anordnung der Zentrieranformungen 34e an den Laschen 34c des Gelenkgliedes 34 ergeben sich insbesondere aus den Fign. 10-12. Jede Lasche 34c jedes Gelenkgliedes 34 weist eine Zentrieranformung 34e auf, die sich als eine Verbreiterung der Lasche nach oben darstellt. Die beiden Kettenglieder 34 jeder Bandlamelle 32 sind an diese mittels Rastzungen 34f anclipsbar. Die Rastzungen 34f durchsetzen einen Ausschnitt 32f im planen Endabschnitt 32e der betreffenden bandlamelle 32. Die geometrische Grundform des Ausschnittes 32f ist insbesondere aus Fig. 8 erkennbar. Der Ausschnitt 32f wird, wie insbesondere aus Fig.9 ersichtlich, von zwei Rastzungen 34f für den Hintergriff der Hintergriffsteile 34f′ durchsetzt. Die beiden Rastzungen 34f sind an ihrer Basis über Querstege 34g (Fig. 9,12,14) mit den benachbarten Laschen 34c des Kettengliedes 34 verbunden. Die Bandlamellen 32 überdecken die Kettenglieder 34 mit abgekröpften Endabschnitten 32e′. Die die Förderfläche der Fördereinheit 20 bildenden Mittelabschnitte 32e der Bandlamellen 32 liegen etwa in einer Ebene z-z (Fig. 6), die mit den Achsen der Gelenkbolzen 34a korrespondiert. Dadurch sind die Gelenkbolzen 34a der Gelenkkette G (Fig. 4) in ihren Gelenkbolzen-Lagerteilen 34b mit Hilfe der planen, überdeckenden Endabschnitte 32e gesichert, indem diese Endabschnitte 32e je an einen Begrenzungsring 34d des benachbarten Gelenkbolzens 34a anliegen. Der Begrenzungsring 34d ist, wie insbesondere aus den Fign. 10,12 ersichtlich, durch eine mittige Ringwulst des Gelenkbolzens 34a gebildet. Die beiden der Symmetrieebene s-s des Förderbandes zugewandten Rastzungen 34f liegen mit ihren Hintergriffsteilen 34f′ an einer Stanzkante 32h (Fig. 6) eines Lappens 32d′ der Bandlamelle 32 an. Die Stanzkante 32h ergibt sich dadurch, daß im Kröpfbereich 32d der Lappen 32d′ dreiseitig aus der Bandlamelle 32 ausgestanzt und senkrecht zur Förderfläche abgebogen ist.Der Lappen 32e′ dient zur Versteifung des planen Endabschnittes 32e.

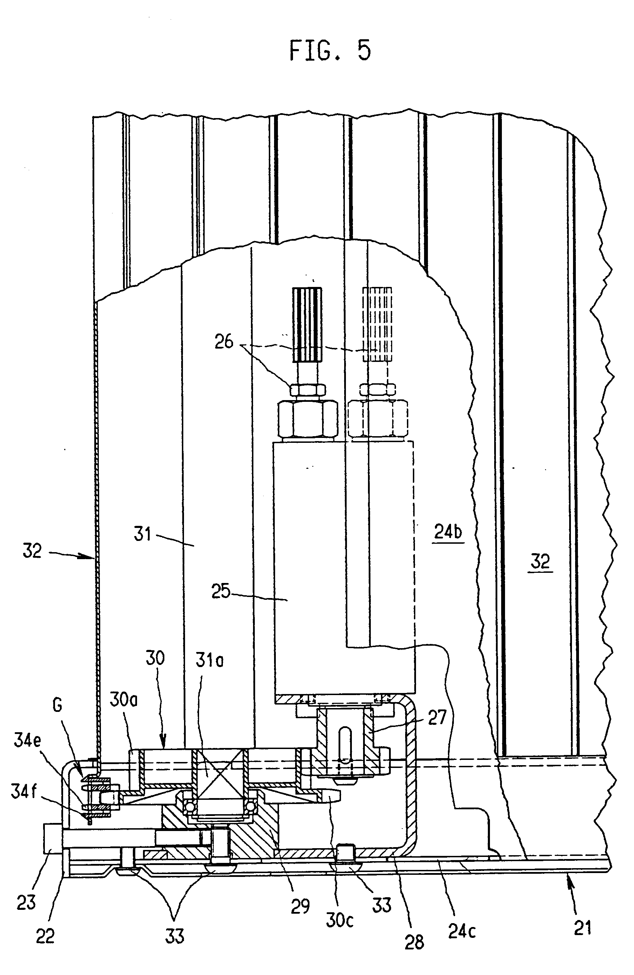

Wie das Traggerüst der Fördereinheit 20 aufgebaut ist, ergibt sich insbesondere aus den Fign. 2-5. Es umfaßt senkrecht zur Förderrichtung angeordnete Profilelemente 24a (Fig. 4), die je durch einen Blechwinkel gebildet sind ferner mit den horizontalen Schenkeln der Profilelemente 24a verbundene weitgehend plane Deckbleche 24b. Ferner zwei vertikale Seitenbleche 24c, welche die Profilelemente 24a beidseits miteinander verbinden. Entlang der Längsseiten der Fördereinheit sind Abschlußbleche 21 vorgesehen, welche die Gelenkketten G mit den Kettenrädern 30 überdecken. Ein unterer horizontaler Schenkel 21a des etwa U-förmig profilierten Abschlußbleches bildet die Aufstellfläche für das Abstellen der Fördereinheit 20 auf den Aufnahmeleisten 11. Wie insbesondere aus Fig. 5 ersichtlich, ist der hydraulische Antriebsmotor 25 mit seinen Anschlüssen 26 zwischen dem oberen und unteren Trumm des Förderbandes mittels eines U-förmigen Bügels 28 am benachbarten Seitenblech 24c befestigt. Das Antriebsritzel 27 des Antriebsmotors 25 kämmt mit einem Zahnkranz 30a des benachbarten Kettenrades 30, das mit einem weiteren Zahnkranz 30c mit größerem Radius mit der benachbarten Gelenkkette G kämmt. Eine Verbindungswelle 31 ist über die beiden endständigen Kettenräder 30 in Lagergehäusen 29 gelagert. Die Lagergehäuse 29 sind mittels Befestigungsschrauben 33 in den benachbarten Seitenblechen 24c abgestützt, welche Befestigungsschrauben in horizontalen Längsschlitzen der Seitenbleche 24c in Förderrichtung verstellbar sind. Die Verstellung geschieht mit Hilfe einer Spannschraube 23, die axial von einem stirnseitigen Deckel 22 des Traggerüstes 24 abgestützt ist und mit dem zugehörigen Lagergehäuse im Gewindeeingriff steht. Insoweit ist die Spannschraube 23 Bestandteil einer Spannvorrichtung für das Förderband, auf die jedoch nicht weiter eingegangen zu werden braucht, da ihr wesentlicher Aufbau, wie auch der Aufbau des Traggerüstes der Fördereinheit 20 aus der DE 34 08 459 (C2) an sich bekannt ist. Alle vier Kettenräder der Fördereinheit 20 sind identisch ausgebildet.

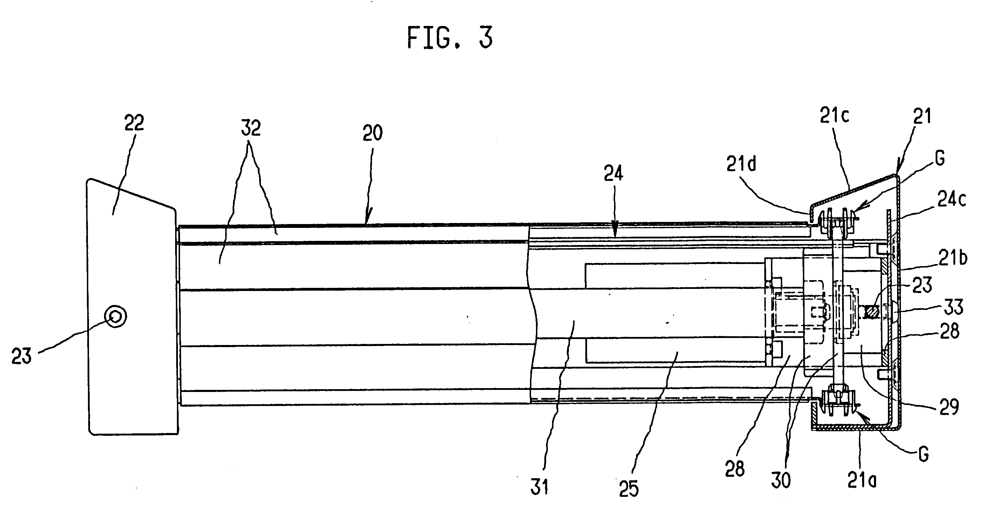

Wie insbesondere aus Fig. 3 ersichtlich, weist ein oberer eingebogener Schenkel 21c* des Abschlußbleches 21 einen vertikal nach unten abgebogenen Rand 21d auf, der eine vertikale Begrenzung der Förderfläche des Förderbandes darstellt und die Gelenkkette G nach außen abschirmt. Die beiden Verbindungswellen 31 weisen im Querschnitt viereckige Endabschnitte 31a auf (Fig.4), auf welchen die Kettenräder 30 zur Mitnahme sitzen. Jede Bandlamelle weist zur Versteifung einen rechtwinklig abgebogenen längsseitigen Rand 32a (Fig. 6,7) auf. Die gegenüberliegende Längsseite jeder Bandlamelle ist im Mittelbereich geringfügig nach oben abgekröpft und bildet einen Überdeckungsbereich 32b, mit dem sich benachbarte Bandlamellen überlappen.
* der vertikalen Außenseite 21b

Gemäß einem weiteren Ausführungsbeispiel (Anspruch 8) sind Stahlgelenk-Ketten, z.B. Gallsche Ketten vorgesehen. Dabei sind die Bandlamellen 32 mit Hilfe gesonderter Kunststoff-Formstücke an die Bolzen der Gelenkkette anclipsbar. Diese gesonderten Kunststoff-Formstücke hintergreifen mittels Hintergriffsorganen einerseits die Bolzen der Gelenkkette und andererseits mittels elastischer Rastzungen die zugehörige Bandlamelle 32.

Bei Durchhängen der Ketten der Fördereinheit 20 rutschen die Kettenglieder 34 auf den Endbereichen der Zentrieranformungen 34e. Dadurch wird der Verschleiß der eigentlichen Kettenglieder 34 bei ungenügender Kettenspannung verringert.

Anstelle der Blechzuschnitte können auch aus thermoresistentem Kunststoff gebildete Kunststofflamellen verwendet werden.

## Patentansprüche

1. Fördervorrichtung an einer Kunststoff-Spritzgießmaschine zum Austragen der im Takt der Arbeitszyklen aus dem Spritzgießwerkzeug (13) fallenden Spritzteile (15) aus dem Maschinengestell (10), mit einem endlosen, auf Umlenkrädern motorisch antreibbaren als Gliederband ausgebildeten Transportband, dessen innerhalb des Maschinengestells (10) liegende Förderfläche sich wenigstens teilweise mit der vertikalen Projektion des Spritzgießwerkzeuges (13) deckt, welche Förderfläche aus plattenförmigen Fördergliedern gebildet ist, die gelenkig miteinander verbunden und annäherungsweise symmetrisch zur Symmetrieebene (s-s in Fig. 2) des Transportbandes angeordnet sind,
dadurch gekennzeichnet, daß als Förderglieder aneinandergereihte Bandlamellen (32) vorgesehen sind, die aus Blech oder einem thermoresistenten Kunststoff gebildet und auf den Kettengliedern (34) von Gelenkketten (G) abgestützt sowie dadurch manuell aus dem Gliederband herauslösbar bzw. in dieses einfügbar sind, daß die Bandlamellen (32) mittels identischer, mit Zentrieranformungen und federnden Rastzungen versehenen Kunststoff-Formstücken (Kettenglieder 34) durch Verclipsung an den Gelenkketten (G) befestigt sind, wobei die Gelenkketten mit den als Kettenrädern (30) ausgebildeten Umlenkrädern kämmen.

2. Fördervorrichtung nach Patentanspruch 1, dadurch gekennzeichnet, daß die Kunststoff-Formstücke die voneinander manuell trennbaren Kettenglieder (34) der Gelenkketten (G) bilden.

3. Fördervorrichtung nach Patentanspruch 1 oder 2, dadurch gekennzeichnet, daß die Kettenglieder (34) einenends einen von Laschen (34c) begrenzten Gelenkbolzen (34a) aufweisen und anderenends in ein Gelenkbolzen-Lagerteil (34b) auslaufen, in welches der Gelenkbolzen (34a) des benachbarten Kettengliedes (34) radial unter Herstellung des Hintergriffs einfügbar ist.

4. Fördervorrichtung nach Patentanspruch 3, dadurch gekennzeichnet, daß das Gelenkbolzen-Lagerteil (34b) durch halbringförmige Laschenabschnitte (34b') mit halbkreisförmigen Schwenklagern gebildet ist, welche Laschenabschnitte (34b') über einen halbkreisförmigen Steg (34i) miteinander verbunden sind, der den Eingriffsbereich für den Kettenradeingriff bildet.

5. Fördervorrichtung nach Patentanspruch 4, dadurch gekennzeichnet, daß wenigstens eine Zentrieranformung (34e) jedes Kettengliedes (34) in einen Ausschnitt (32f) der zugehörigen Bandlamelle (32) unter Führung an Gleitflächen (34e''') einfügbar ist und mit senkrecht zueinander stehenden Zentrierflächen (34e'; 34e'' in Fig. 10-13) an Anlagekanten (32g in Fig. 8,9,14) der zugehörigen Bandlamelle (32) anliegt.

6. Fördervorrichtung nach Patentanspruch 5, dadurch gekennzeichnet, daß die Bandlamellen (32) mittels Rastzungen (34f) mit den Kettengliedern (34) verclipsbar sind, welche Rastzungen (34f) die Ausschnitte (32f) der Bandlamellen (32) für den Hintergriff ihrer Hintergriffsteile (34f') durchsetzen und an ihrer Basis über Querstege (34g in Fig. 9,12,14) mit den Laschen (34c) des Kettengliedes (34) verbunden sind.

7. Fördervorrichtung nach einem der vorhergehenden Patentansprüche, dadurch gekennzeichnet, daß die Bandlamellen (32) die Kettenglieder (34) mit abgekröpften Endabschnitten (32e) überdecken, die je an einem Begrenzungsring (34d) des benachbarten Gelenkbolzens (34a) anliegen (Fig. 6), wobei Rastzungen (34f) der Kettenglieder (34) mit Hintergriffsteilen (34f') die Bandlamellen (32) hintergreifen (Fig. 6).

8. Fördervorrichtung nach einem der Patentansprüche 1 oder 2, dadurch gekennzeichnet, daß als Gelenkketten Stahlgelenkketten (z.B. Gallsche Ketten) vorgesehen sind, wobei die Bandlamellen (32) mit Hilfe der Kunststoff-Formstücke (Anspruch 2) an die Bolzen der Gelenkkette anclipsbar sind.

## Claims

1. Conveyor for a plastics material injection moulding machine for delivering the mouldings (15) from the machine frame (10), which mouldings drop from the injection moulding tool (13) in time with the operating cycles, said conveyor including an endless conveyor belt, which is motor-driven on guide wheels and is a link belt, the conveying surface of such belt being disposed internally of the machine frame (10) and being covered at least partially with the vertical projection of the injection moulding tool (13), which conveying surface is formed from plate-like conveying members which are interconnected in a pivotal manner and are disposed approximately symmetrically relative to the plane of symmetry (s-s in Fig. 2) of the conveyor belt,
characterised in that slats (32), which are disposed in series with one another, are provided as conveying members which are formed from sheet metal or a heat-resistant plastics material, said slats being supported on the chain links (34) of link chains (G) and being manually releasable from the link belt or insertable therein, in that the slats (32) are mounted on the link chains (G) by being clipped thereto by means of identical plastics material moulded parts (chain links 34), which are provided with centering projections and resilient detent tongues, the link chains meshing with the guide wheels, which are in the form of chain sprockets (30).

2. Conveyor according to claim 1, characterised in that the plastics material moulded parts form the chain links (34) of the link chains (G), which links are manually separable from one another.

3. Conveyor according to claim 1 or 2, characterised in that the chain links (34), at the one end, have a pivot pin (34a), which is defined by link plates (34c) and, at the other end, extend into a pivot pin mounting portion (34b), into which the pivot pin (34a) of the adjacent chain link (34) is radially insertable so as to effect the locking.

4. Conveyor according to claim 3, characterised in that the pivot pin mounting portion (34b) is formed by semi-annular link plate portions (34b') having semi-circular swivel bearings, which link plate portions (34b') are interconnected via a semi-circular cross-piece (34i), which forms the engagement region for engagement of the chain sprocket.

5. Conveyor according to claim 4, characterised in that at least one centering projection (34e) of each chain link (34) is insertable into an aperture (32f) in the associated slat (32) while being guided along sliding surfaces (34e''') and abuts, with centering surfaces (34e'; 34e'' in Figs. 10-13) which extend perpendicularly relative to each other, against engaging edges (32g in Figs. 8, 9, 14) of the associated slat (32).

6. Conveyor according to claim 5, characterised in that the slats (32) can be clipped, by means of detent tongues (34f), to the chain links (34), which detent tongues (34f) extend through the apertures (32f) in the slats (32) for the locking of their locking portions (34f') and are connected, at their base, to the link plates (34c) of the chain link (34) via cross-pieces (34g in Figs. 9, 12, 14).

7. Conveyor according to one of the preceding claims, characterised in that the slats (32) cover the chain links (34) with turned-up end portions (32e), which each abut against a restraining ring (34d) of the adjacent pivot pin (34a) (Fig. 6), detent tongues (34f) of the chain links (34) engaging behind the slats (32) with locking portions (34f') (Fig. 6).

8. Conveyor according to one of claims 1 or 2, characterised in that steel link chains (e.g. Gall chains) are provided as link chains, the slats (32) being clippable onto the pins of the link chain by means of the plastics material moulded parts (claim 2).

## Revendications

1. Dispositif de transport sur une machine à mouler par injection des matières plastiques, pour décharger du bâti (10) de la machine les pièces moulées (15) qui tombent du moule d'injection (13) à la cadence des cycles de travail, avec une bande transporteuse sans fin réalisée sous la forme d'une bande transporteuse à maillons motorisée, qui est guidée sur des poulies de renvoi et dont la surface transporteuse, située à l'intérieur du bâti de machine (10), coïncide au moins partiellement avec la projection verticale du moule d'injection (13) et est constituée de maillons de transport en forme de plaques, mutuellement articulés et disposés approximativement symétriquement au plan de symétrie (s-s sur la figure 2) de la bande transporteuse,
**caractérisé** en ce qu'il est prévu comme maillons de transport des lamelles de bande juxtaposées (32), qui sont réalisées en tôle ou en matière plastique résistant à la chaleur, s'appuient sur les maillons (34) de chaînes articulées (G) et peuvent être insérées à la main dans la bande transporteuse, ou en être déposées, par le fait que ces lamelles (32) sont clipsées sur les chaînes articulées (G) au moyen de pièces façonnées en plastique (maillons de chaîne 34) identiques et pourvues de formations de centrage et de languettes d'enclenchement élastiques, les chaînes articulées étant en prise avec les poulies de renvoi réalisées sous la forme de roues à chaîne (30).

2. Dispositif de transport selon la revendication 1, **caractérisé** en ce que les pièces façonnées en plastique constituent les maillons (34) des chaînes articulées (G), qui peuvent être mutuellement séparés à la main.

3. Dispositif de transport selon la revendication 1 ou 2, **caractérisé** en ce que les maillons de chaîne (34) présentent à une extrémité un goujon d'articulation (34a) délimité par des pattes (34c) et se terminent, à l'autre extrémité, par une partie réceptrice de goujon d'articulation (34b), dans laquelle le goujon d'articulation (34a) du maillon de chaîne (34) voisin peut être introduit radialement en réalisant une prise arrière.

4. Dispositif de transport selon la revendication 3, **caractérisé** en ce que la partie réceptrice de goujon d'articulation (34b) est formée par des parties de patte semi-annulaires (34b') à paliers de pivotement semi-circulaires, qui sont mutuellement reliées par une nervure semi-circulaire (34i) constituant la région d'engagement pour la roue à chaîne.

5. Dispositif de transport selon la revendication 4, **caractérisé** en ce qu'au moins une formation de centrage (34e) de chaque maillon de chaîne (34) peut être introduite dans une découpure (32f) de la lamelle de bande associée (32), en étant guidée sur des faces de glissement (34e'''), et s'applique par des faces de centrage mutuellement perpendiculaires (34e'; 34e'' sur les figures 10 à 13) contre des arêtes d'application (32g sur les figures 8,9,14) de la lamelle de bande associée (32).

6. Dispositif de transport selon la revendication 5, **caractérisé** en ce que les lamelles de bande (32) peuvent être clipsées sur les maillons de chaîne (34) au moyen de languettes d'enclenchement (34f), qui traversent les découpures (32f) des lamelles de bande (32) pour la prise arrière de leur partie inclinée de prise arrière (34f'), et sont assemblées par leur base aux pattes (34c) du maillon de chaîne (34) au moyen de nervures transversales (34g sur les figures 9,12, 14).

7. Dispositif de transport selon l'une quelconque des revendications précédentes, **caractérisé** en ce que les lamelles de bande (32) recouvrent les maillons de chaîne (34) par des parties terminales coudées (32e), qui s'appliquent chacune contre un anneau de délimitation (34d) du goujon d'articulation voisin (34a) (figure 6), des languettes d'enclenchement (34f) des maillons de chaîne (34) engageant par l'arrière les lamelles de bande (32) par des parties inclinées de prise arrière (34f') (figure 6).

8. Dispositif de transport selon la revendication 1 ou 2, **caractérisé** en ce qu'il est prévu comme chaînes articulées des chaînes articulées en acier (chaînes de Galle par exemple), les lamelles de bande (32) pouvant être clipsées sur les goujons des chaînes articulées au moyen des pièces façonnées en plastique (revendication 2).
